Europäisches Patentamt

European Patent Office

Office européen des brevets

(11) Veröffentlichungsnummer: **0 477 492 A2**

## EUROPÄISCHE PATENTANMELDUNG

(21) Anmeldenummer: **91111780.2**

(51) Int. Cl.5: **G03B 21/64**

(22) Anmeldetag: **15.07.91**

(30) Priorität: **24.09.90 DE 4030198**
**08.02.91 DE 4103910**

(43) Veröffentlichungstag der Anmeldung:
**01.04.92 Patentblatt 92/14**

(84) Benannte Vertragsstaaten:
**DE FR GB IT**

(71) Anmelder: **GEIMUPLAST PETER MUNDT GmbH
& Co. KG
Partenkirchner Strasse 50
W-8105 Farchant(DE)**

(72) Erfinder: **Stemmer, Gottfried
Münchner Strasse 39
W-8100 Garmisch-Partenkirchen(DE)**

(74) Vertreter: **Zinnecker, Armin, Dipl.-Ing.
Lorenz-Seidler-Gossel et al
Widenmayerstrasse 23
W-8000 München 22(DE)**

(54) **Verfahren und Vorrichtung zum Einfüllen von Diapositiv-Rähmchen oder von Filmstreifen in die Taschen einer Eintaschfolie.**

(57) Ein Verfahren dient zum Einfüllen von Diapositiv-Rähmchen (17,21) oder von Filmstreifen in die durch Quernähte (6), vorzugsweise Querschweißnähte, voneinander abgeteilten Taschen (10) einer zweilagigen, auf einer Seite (14) offenen Eintaschfolie (2). Ein oder mehrere Diapositiv-Rähmchen (17,21) werden hintereinander in eine Tasche (10) eingefüllt, oder ein Filmstreifen wird in eine Tasche (10) eingefüllt. Die Eintaschfolie (2) wird dann in Folien-Längsrichtung (12) zur nächsten zu füllenden Tasche (10) weiter transportiert. Um ein derartiges Verfahren zu vereinfachen, wird beim Weitertransport der Eintaschfolie (2) zur Positionierung der nächsten zu füllenden Tasche (10) die Lage der nächsten Quernaht (6) erfaßt, und zwar durch einen Fühler (1), der an der offenen Seite (14) der Eintaschfolie (2) zwischen die Folienlagen (11,13) eintaucht, der in einer Richtung (18) parallel zu den Querschweißnähten (6) längsbeweglich ist, der an seinem in die Folie (2) eintauchenden Ende eine Keilfläche (19) aufweist und durch den ein Schalter (4) betätigbar ist

Fig. 1

Die Erfindung betrifft ein Verfahren zum Einfüllen von Diapositiv-Rähmchen oder von Filmstreifen in die durch Quernähte, vorzugsweise Querschweißnähte, voneinander abgeteilten Taschen einer zweilagigen, auf einer Seite offenen Eintaschfolie, und eine Vorrichtung zur Durchführung eines derartigen Verfahrens.

Ein derartiges Verfahren zum Einfüllen von Diapositiv-Rähmchen in die Taschen einer Eintaschfolie ist aus der DE-OS 37 08 880 und der EP-A 1 228 536 bekannt. Bei den vorbekannten Verfahren werden Diapositiv-Rähmchen in die durch Querschweißnahte voneinander abgeteilten Taschen einer zweilagigen, auf einer Seite offenen, endlosen Eintaschfolie eingefüllt. Die Taschen erstrecken sich in Folien-Querrichtung. Jede Tasche ist geeignet, mehrere Diapositiv-Rähmchen hintereinander aufzunehmen. Die Diapositiv-Rähmchen werden hintereinander durch die Öffnung an einer Seite der Eintaschfolie eingeschoben. Jede Tasche weist Öffnungen in einer der beiden Folien auf, die im Abstand der Dias angeordnet sind, so daß jedes Dia einzeln entnommen werden kann. Die Einzelheiten werden in der DE-OS 37 08 880 beschrieben; auf diese Vorveröffentlichung wird ausdrücklich Bezug genommen. Nach dem Befüllen einer Tasche wird die Eintaschfolie in Folien-Längsrichtung, also quer zur Richtung der Taschen, weitertransportiert, und zwar zur nächsten zu füllenden Tasche. Die Eintaschfolie wird also um eine Strecke weitertransportiert, die dem Abstand der Taschen voneinander entspricht. Um die nächste zu füllende Tasche genau positionieren zu können, sind bei der vorbekannten Lösung Erkennungsmarken aufgedruckt, die aus farbigen, beispielsweise schwarzen, Balken bestehen. Diese Markierungen werden von einem optischen Sensor erfaßt. Die Markierungen sind im Taschenabstand voneinander angeordnet. Sie können beispielsweise mit jeweils einer Querschweißnaht fluchten.

Ein aus der DE-GM 72 24 072 vorbekanntes Verfahren zum Einfüllen von Filmstreifen in die Taschen einer Eintaschfolie arbeitet im wesentlichen in gleicher Weise. Der Unterschied besteht lediglich darin, daß statt Diapositiv-Rähmchen Filmstreifen in die Taschen der Eintaschfolie eingefüllt werden.

Bei den bekannten Lösungen wird demnach die Positionierung der Eintaschfolie mittels Druckmarkierungen, die im konstanten Abstand zu den einzelnen Taschen angebracht sind, gesteuert. Die Eintaschfolie wird nach dem Füllen einer Tasche so weit transportiert, bis die optische Abtastvorrichtung die Lage der nächsten Markierung und damit der nächsten Tasche erkennt.

Nachteilig an den vorbekannten Verfahren sind unvermeidbare Fertigungstoleranzen zwischen den Lagen der Taschen und den Markierungen. Die Anbringung der Markierungen ist nur mit gewissen unvermeidbaren Fertigungstoleranzen möglich. Darüber hinaus stellt der Druckvorgang einen zusätzlichen Arbeitsvorgang dar. Es genügt also nicht, nur die Taschen herzustellen; auch die Druckmarkierungen müssen in einem gesonderten Arbeitsgang gefertigt werden. Schließlich ist auch das Bedrucken der Folie schwierig. Bei einem zu geringen Farbauftrag kann es Probleme bei der Erkennung der Farbmarkierungen und damit bei der Positionierung der Eintaschfolie geben.

Aus der DE-AS 21 66 340 ist eine Vorschubvorrichtung für eine eine Folge von Taschen aufweisende Folienbahn bekannt, welche die Taschen lagegerecht einer Bearbeitungsstation schrittweise zuführt. In Vorschubrichtung vor der Bearbeitungsstation ist ein parallel zur Vorschubrichtung hin- und herbewegbarer Mitnehmerfinger vorgesehen, welcher beim Vorschub die Taschen hintergreift und beim Rückhub außer Eingriff schwenkbar ist. Damit eine derartige Vorrichtung zum faltenfreien Vorschub eines flachen, aus weicher Folie bestehenden Taschenbandes geeignet ist, ist zum Vorschieben eines aus einer längsgefalteten Folienbahn durch Querverbindungen erzeugten Taschenbandes ein Reibband vorgesehen, das zwischen dem an den Querverbindungen angreifenden Mitnehmerfinger und der Bearbeitungsstation angeordnet ist. Das Reibband greift an dem Taschenband an. Es ist im Vorschubtakt mit größerer Geschwindigkeit als der Mitnehmerfinger antreibbar. Die vom Reibband auf das Taschenband unter Schlupf übertragene Zugkraft ist kleiner als die zum Vorschub des Taschenbandes notwendige Kraft. Bei der DE-AS 21 66 340 dient der Mitnehmerfinger nicht zum Erfassen der Lage der nächsten Querverbindung in der Folienbahn, sondern zum Vorschub der Folienbahn um eine Taschenbreite, also dazu, die nächste Tasche der Folienbahn in die Bearbeitungsposition zu bringen.

Aufgabe der Erfindung ist es, ein Verfahren und eine Vorrichtung zum Einfüllen von Diapositiv-Rähmchen oder von Filmstreifen in die Taschen einer Eintaschfolie zu vereinfachen.

Erfindungsgemäß wird diese Aufgabe bei einem Verfahren zum Einfüllen von Diapositiv-Rähmchen oder von Filmstreifen in die Taschen einer Eintaschfolie dadurch gelöst, daß beim Weitertransport der Eintaschfolie zur Positionierung der nächsten zu füllenden Tasche die Lage der nächsten Quernaht erfaßt wird. Nach dem erfindungsgemäßen Lösungsvorschlag wird also auf eine Markierung auf der Eintaschfolie verzichtet und die Taschenposition direkt abgefragt. Hierdurch werden die eingangs beschriebenen Nachteile vermieden.

Vorteilhafte Weiterbildungen sind in den Unteransprüchen beschrieben.

Die Lage der nächsten Quernaht kann durch einen Fühler erfaßt werden. Dieser Fühler kann an der offenen Seite der Eintaschfolie zwischen die Folienlagen eintauchen. Der Fühler kann die in Folien-Transportrichtung vorlaufende Seite der Quernaht erfassen bzw. abtasten. Er kann aber auch die in Folien-Transportrichtung nachlaufende Seite der Quernaht erfassen bzw. abtasten. Darüber hinaus ist es möglich, dasjenige Ende der Schweißnaht zu erfassen bzw. abzutasten, das der offenen Seite der Eintaschfolie zugewandt ist, also das sogenannte schmale Ende bzw. die sogenannte schmale Seite der Schweißnaht. Die Quernaht bzw. Querschweißnaht kann auch eine besondere Formgebung aufweisen, die die Abtastung erleichtert. Die "Schweißnaht" kann aus zwei beabstandeten, nahe beieinander liegenden, parallelen Schweißnähten bestehen, um gegebenenfalls zwischen diesen beiden Schweißnähten einen Schnitt vornehmen zu können. Wenn die Folie zwischen den beiden nebeneinander liegenden Schweißnähten (oder innerhalb einer verhältnismäßig breiten Schweißnaht) durchgeschnitten wird, sind die Taschen auf beiden Seiten trotzdem nach wie vor geschlossen.

Bei einer Vorrichtung zur Durchführung eines Verfahrens zum Einfüllen von Diapositiv-Rähmchen oder von Filmstreifen in die Taschen einer Eintaschfolie wird die oben angegebene Aufgabe gelöst durch eine Abtasteinrichtung zum Erfassen der Lage der Quernaht der nächsten zu füllenden Tasche der Eintaschfolie beim Weitertransport der Eintaschfolie.

Vorteilhafte Weiterbildungen sind in den Unteransprüchen beschrieben.

Die Abtasteinrichtung kann einen Fühler besitzen. Der Fühler kann an der offenen Seite der Eintaschfolie zwischen die Folienlagen eintauchen.

Es ist möglich, daß der Fühler die in Folien-Transportrichtung vorlaufende Seite der Quernaht erfaßt. Der Fühler kann aber auch die in Folien-Transportrichtung nachlaufende Seite der Quernaht erfassen. Weiterhin kann durch den Fühler die spitze oder schmale Seite der Schweißnaht abgetastet werden. Nach einer weiteren vorteilhaften Weiterbildung ist der Fühler geeignet, eine spezielle Ausgestaltung der Schweißnaht abzutasten.

Der Fühler kann längsbeweglich sein. Vorteilhaft ist es, wenn sich der Fühler linear in Richtung der Taschen bewegen kann, also in einer Richtung quer zur Folien-Transportrichtung. Es ist aber auch möglich, daß der Fühler um einen Drehpunkt schwenkbar beweglich ist.

Der Fühler kann eine Keilfläche aufweisen. Diese Keilfläche kann an demjenigen Ende der Schweißnaht angreifen, das der offenen Seite der Eintaschfolie zugewandt ist, also an dem sogenannten schmalen Ende bzw. der sogenannten schmalen Seite der Schweißnaht. Durch den Angriff der Keilfläche an diesem Ende der Schweißnaht wird der Fühler verschoben oder verdreht. Das schmale Ende der Schweißnaht kann halbrund ausgeführt sein. Es kann aber auch spitz zulaufen, um einen Einführtrichter für die Diapositiv-Rähmchen bzw. die Filmstreifen zu erzeugen.

Vorzugsweise ist ein Schalter vorgesehen, der durch den Fühler betätigbar ist. Dieser Schalter steuert die Bewegung der Eintaschfolie in der Weise, daß der Weitertransport der Eintaschfolie beendet wird, wenn der Schalter betätigt wird.

Ein Ausführungsbeispiel der Erfindung wird nachfolgend anhand der beigefügten Zeichnung im einzelnen beschrieben.

In der Zeichnung zeigt

Fig. 1    eine Eintaschfolie in einer Vorrichtung zum Einfüllen von Diapositiv-Rähmchen in die Taschen der Eintaschfolie mit einer Abtasteinrichtung in einer Ansicht von oben,

Fig. 2    einen Schnitt durch die Eintaschfolie gemäß Fig. 1 längs der Linie A-A,

Fig. 3    eine Eintaschfolie in einer Vorrichtung zum Einfüllen von Filmstreifen in die Taschen der Eintaschfolie mit einer Abtasteinrichtung in einer Ansicht von oben und

Fig. 4    einen Schnitt durch die Eintaschfolie gemäß Fig. 3 längs der Linie B-B.

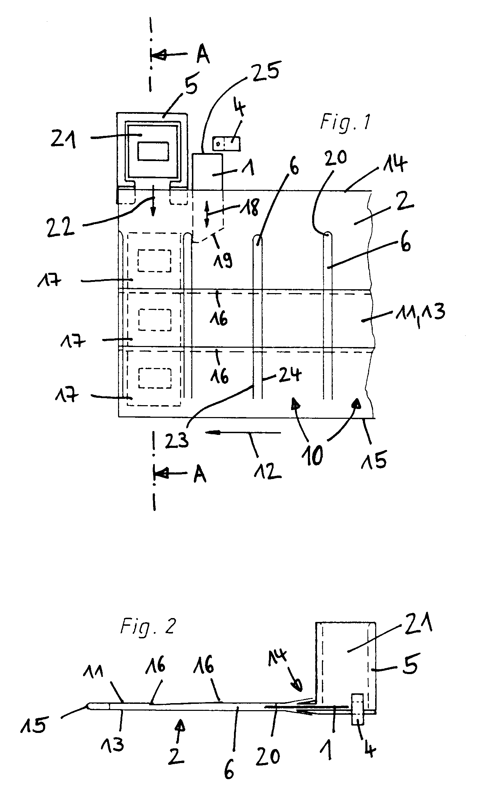

Die Fig. 1 zeigt eine Eintaschfolie 2 mit einer Vielzahl von Quertaschen 10, die in Folien-Längsrichtung 12 durch Querschweißnähte 6 voneinander abgetrennt werden. Die Eintaschfolie 2 ist in der DE-OS 37 08 880 ausführlich beschrieben; auf diese Druckschrift wird hiermit ausdrücklich Bezug genommen. Die Eintaschfolie 2 besteht aus zwei übereinander angeordneten Lagen 11,13, nämlich einer unteren Lage 13 und einer oberen Lage 11. Auf der Einfüllseite 14 ist die Eintaschfolie 2 offen, auf der gegenüberliegenden Seite 15 ist sie geschlossen. Die Eintaschfolie 2 ist aus einer einzigen Lage gefaltet.

Die Querschweißnähte 6 sind kürzer als die Folienbreite; sie enden also jeweils vor den Seiten 14 und 15 der Eintaschfolie 2.

Jede Tasche 10 besitzt an ihrer Oberseite 11 Öffnungen 16, die im Abstand der Diapositiv-Rähmchen 17 angeordnet sind, so daß jedes Rähmchen gesondert aus der Tasche entnommen werden kann.

An der offenen Seite 14 der Eintaschfolie 2 ist ein Fühler 1 angeordnet, der in Richtung des Doppelpfeils 18 längsbeweglich ist. Der Fühler taucht an der offenen Seite 14 der Eintaschfolie 2 zwischen die Folienlagen 11,12 ein (vgl. Fig. 2). Anstelle des in den Zeichnungen dargestellten, linear beweglichen Fühlers 1 kann auch ein Fühler vorgesehen sein, der um einen Drehpunkt schwenkbar beweglich ist.

An seinem in die Eintaschfolie 2 eintauchenden Ende besitzt der Fühler 1 eine Keilfläche 19, die mit den der offenen Seite 14 der Eintaschfolie 2 zugewandten Enden 20 der Schweißnähte 6 zusammenwirkt.

Bei der Durchführung des Verfahrens werden die im Magazin 5 befindlichen Diapositiv-Rähmchen 21 in die vor dem Magazin 5 liegende Tasche 10 in Richtung des Pfeiles 22 hintereinander eingeschoben. Ein in den Zeichnungen nicht dargestellter Schieber schiebt das jeweils unterste Rähmchen 21 aus dem Magazin in die Tasche 10. Auf diese Weise werden insgesamt drei Diapositiv-Rähmchen in die Quertasche 10 eingefüllt, bis sie die in der Fig. 1 gestrichelt gezeichnete Stellung 17 erreicht haben.

Nach dem Füllen dieser Tasche 10 wird die Eintaschfolie 2 in Folien-Längsrichtung 12 so weit transportiert, bis die nächste Tasche 10 dem Magazin 5 gegenüberliegt. Zur Steuerung dieses Vorganges und zur exakten Positionierung der nächsten zu füllenden Tasche 10 dient der Fühler 1. Die Eintaschfolie 2 wird so weit in Folien-Längsrichtung 12 transportiert, bis der Fühler 1 die nächste Schweißnaht 6 erreicht und einen Schalter 4 betätigt. Wenn das vordere Ende 20 der nächsten Schweißnaht 6 auf die Keilfläche 19 des Fühlers 1 auftrifft, wird dieser Fühler 1 durch das Zusammenwirken der Keilfläche 19 mit dem vorderen Ende 20 der Schweißnaht 6 in Richtung des Pfeiles 18 nach oben bewegt. Er kann dann den Schalter 4 auslösen. Der Fühler 1 ist zu diesem Zweck vorzugsweise federbelastet. Die in den Zeichnungen nicht dargestellte Feder trachtet, den Fühler 1 in der in Fig. 1 gezeigten Stellung zu halten.

Der Fühler 1 kann die in Folien-Transportrichtung 12 vorlaufende Seite 23 der Quernaht 6 erfassen. Es ist aber auch möglich, daß der Fühler 1 die in Folien-Transportrichtung 12 nachlaufende Seite 24 der Quernaht 6 erfaßt. Die Anordnung kann beispielsweise so getroffen sein, daß der Fühler 1 bei der durch das Zusammenwirken der Keilfläche 19 mit dem vorderen Ende 20 der Quernaht 6 hervorgerufenen Bewegung in Pfeilrichtung 18 nach oben zunächst den Schalter 4 aktiviert und bei der anschließenden, durch die Federbelastung bewirkten Bewegung in Pfeilrichtung 18 nach unten den Schalter 4 auslöst. In diesem Fall erfaßt der Fühler 1 die nachlaufende Seite 24 der Querschweißnaht 6.

Der Schalter 4 unterbricht dann in mechanischer, opto-elektronischer oder anderer Ausführung den Vorschub der Eintaschfolie 2 in Folien-Längsrichtung 12. Jetzt ist die nächste Tasche 10 richtig positioniert; sie kann gefüllt werden.

Bei der Abtastung der Quernähte 6 durch den Fühler 1 kann sowohl die vorlaufende als auch die nachlaufende Seite der Schweißnaht abgetastet werden. Das zur offenen Seite der Folie hin zeigende Ende der Schweißnaht, also die sogenannte schmale Seite der Schweißnaht, kann - wie in der Zeichnung dargestellt - halbrund ausgeführt sein. Es kann allerdings auch spitz zulaufen, um einen Einführtrichter für die Diapositiv-Rähmchen (bzw. Filmstreifen) zu bilden. Die "Schweißnaht" kann aus zwei beabstandeten, nahe beieinander liegenden, parallelen Schweißnähten bestehen. Sehr oft sind diese beiden Schweißnähte nicht verbunden. Der Fühler muß dann - wie in der Zeichnung dargestellt - so ausgebildet werden, daß er nicht zwischen die beiden benachbarten Schweißnähte tauchen kann, da er dann den Schalter vorzeitig betätigen würde. In der in Fig. 1 gezeigten Ausführungsform ist das der offenen Seite 14 der Eintaschfolie 2 zugewandte, vordere Ende 20 der Schweißnähte abgerundet ausgebildet. Der Fühler 1 kann beispielsweise (in der Zeichnung nicht dargestellt) den "höchsten", am nächsten zur offenen Seite 14 liegenden Punkt der im wesentlichen halbkreisförmigen Abrundung des vorderen Endes 20 der Schweißnaht 6 abtasten. Die Quernähte 6 können weiterhin beispielsweise (in der Zeichnung ebenfalls nicht dargestellt) am vorderen Ende 20 spitz zulaufend ausgebildet sein; der Fühler 1 kann dann diese Spitze der Schweißnaht abtasten.

Besonders vorteilhaft an dem beschriebenen Verfahren ist es, daß durch den festen Abstand des Fühlers 1 zum Magazin 5 (in Folien-Längsrichtung 12) auch wechselnde Schweißnahtabstände immer eine richtige Positionierung der Eintaschfolie 2 vor dem Einfüllmagazin 5 ergeben. Es versteht sich, daß der Abstand der Schweißnähte 6 in Folien-Längsrichtung 12 nicht kleiner sein darf als die Breite der einzufüllenden Diapositiv-Rähmchen.

Der Fühler 1 ist in Richtung des Doppelpfeils 18 längsbeweglich, also in einer Richtung parallel zur Richtung der Querschweißnähte 6 und damit der Taschen 10 und in einer Richtung senkrecht zur Folien-Längsrichtung 12. Der Schalter 4 ist auf der der Eintaschfolie 2 gegenüberliegenden Seite des Fühlers 1 angeordnet; er wirkt also mit dem der Keilfläche 19 gegenüberliegenden Ende 25 des Fühlers 1 zusammen.

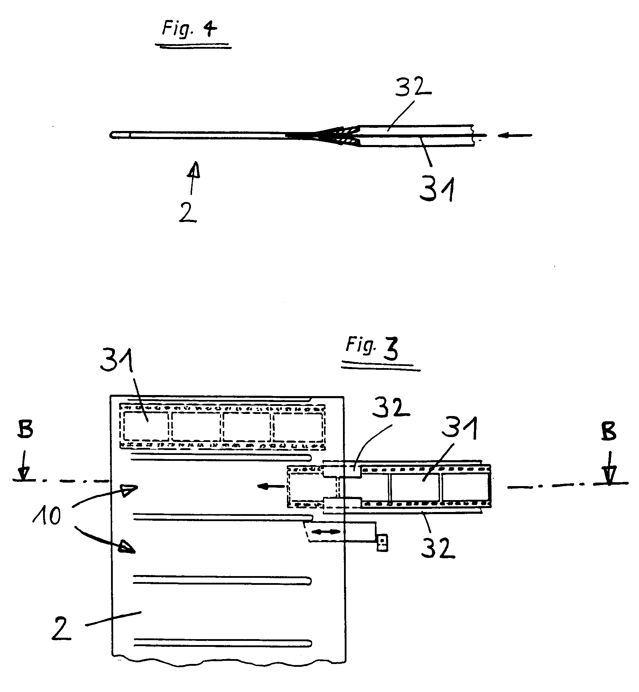

Die Fig. 3 zeigt in einer der Fig. 1 entsprechenden Darstellung, in der gleiche Teile mit gleichen Bezugszeichen bezeichnet sind, so daß sie nicht erneut beschrieben werden müssen, eine Eintaschfolie 2 in einer Vorrichtung zum Einfüllen von Filmstreifen 31 in deren Quertaschen 10. Bei den Filmstreifen kann es sich um ungerahmte Filmstreifen handeln. Dabei kann es sich sowohl um Streifen mit mehreren Diapositiven als auch um Streifen mit mehreren Negativen handeln. Im allgemeinen setzen sich die Filmstreifen aus vier bis sechs Einzelbildern zusammen. Die Filmstreifen können in an sich bekannter Weise geschnitten werden. Sie werden über eine Schiene 32 in die Quertaschen 10 eingeführt.

Die Fig. 4 zeigt in einer der Fig. 2 entsprechenden Darstellung einen Schnitt längs der Linie B-B in Fig. 3.

## Patentansprüche

1. Verfahren zum Einfüllen von Diapositiv-Rähmchen (17,21) oder von Filmstreifen (31) in die durch Quernähte (6), vorzugsweise Querschweißnähte, voneinander abgeteilten Taschen (10) einer zweilagigen, auf einer Seite (14) offenen Eintaschfolie (2), bei dem

ein oder mehrere Diapositiv-Rähmchen (17,21) hintereinander in eine Tasche (10) eingefüllt werden oder ein Filmstreifen in eine Tasche (10) eingefüllt wird

und die Eintaschfolie (2) dann in Folien-Längsrichtung (12) zur nächsten zu füllenden Tasche (10) weitertransportiert wird,

**dadurch gekennzeichnet,**

daß beim Weitertransport der Eintaschfolie (2) zur Positionierung der nächsten zu füllenden Tasche (10) die Lage der nächsten Quernaht (6) erfaßt wird.

2. Verfahren nach Anspruch 1, dadurch gekennzeichnet, daß die Lage der nächsten Quernaht (6) durch einen Fühler (1) erfaßt wird.

3. Verfahren nach Anspruch 2, dadurch gekennzeichnet, daß der Fühler (1) an der offenen Seite (14) der Eintaschfolie (2) zwischen die Folienlagen (11,13) eintaucht.

4. Verfahren nach Anspruch 2 oder 3, dadurch gekennzeichnet, daß der Fühler (1) die in Folien-Transportrichtung (12) vorlaufende Seite (23) der Quernaht (6) erfaßt.

5. Verfahren nach Anspruch 2 oder 3, dadurch gekennzeichnet, daß der Fühler (1) die in Folien-Transportrichtung (12) nachlaufende Seite (24) der Quernaht (6) erfaßt.

6. Vorrichtung zur Durchführung des Verfahrens nach einem der vorhergehenden Ansprüche, bestehend aus

einer Einrichtung zum Einschieben der Diapositiv-Rähmchen (17,21) oder eines Filmstreifens (31) in eine Tasche (10) der Eintaschfolie (2) und

einer Transporteinrichtung zum Weitertransportieren der Eintaschfolie (2) und zum Positionieren der nächsten zu füllenden Tasche (10) der Eintaschfolie (2),

**gekennzeichnet durch**

eine Abtasteinrichtung (1,4) zum Erfassen der Lage der Quernaht (6) der nächsten zu füllenden Tasche (10) der Eintaschfolie (2) beim Weitertransport der Eintaschfolie (2).

7. Vorrichtung nach Anspruch 6, dadurch gekennzeichnet, daß die Abtasteinrichtung einen Fühler (1) besitzt.

8. Vorrichtung nach Anspruch 7, dadurch gekennzeichnet, daß der Fühler (1) an der offenen Seite (14) der Eintaschfolie (2) zwischen die Folienlagen (11,13) eintaucht.

9. Vorrichtung nach Anspruch 7 oder 8, dadurch gekennzeichnet, daß der Fühler (1) die in Folien-Transportrichtung (12) vorlaufende Seite (23) der Quernaht (6) erfaßt.

10. Vorrichtung nach Anspruch 7 oder 8, dadurch gekennzeichnet, daß der Fühler (1) die in Folien-Transportrichtung (12) nachlaufende Seite (24) der Quernaht (6) erfaßt.

11. Vorrichtung nach einem der Ansprüche 7 bis 10, dadurch gekennzeichnet, daß der Fühler (1) längsbeweglich (18) ist.

12. Vorrichtung nach einem der Ansprüche 7 bis 11, dadurch gekennzeichnet, daß der Fühler verschwenkbar ist.

13. Vorrichtung nach einem der Ansprüche 7 bis 12, dadurch gekennzeichnet, daß der Fühler (1) eine Keilfläche (19) aufweist.

14. Vorrichtung nach einem der Ansprüche 7 bis 13, gekennzeichnet durch einen Schalter (4), der durch den Fühler (1) betätigbar ist.

Fig. 1

Fig. 2

_Fig. 4_

32

2

31

_Fig. 3_

31

32

31

B

B

10

32

2